# EUROPEAN PATENT SPECIFICATION

(11) **EP 2 974 901 B1**
(45) Date of publication and mention of the grant of the patent: **18.09.2019**
(21) Application number: 14177316.8
(22) Date of filing: 16.07.2014
(51) Int. Cl.: B60L 1/00, B60L 50/50, F02N 11/08

(54) **Process for transferring electric energy, vehicle adapted for such a process and combination of such a vehicle and an external electric energy source**
Verfahren zur Übertragung von elektrischer Energie, Fahrzeug für ein solches Verfahren und Kombination aus einem solchen Fahrzeug und einer externen elektrischen Energiequelle
Procédé pour transférer de l'énergie électrique, véhicule adapté pour un tel procédé et combinaison d'un tel véhicule et une source d'énergie électrique externe

(43) Date of publication of application: 20.01.2016
(73) Proprietor: IVECO FRANCE S.A.S., 69200 Vénissieux (FR)
(72) Inventor: Gendre, Guy Pierre, 69003 Lyon (FR); Meillat, Roland, 38200 Vienne (FR)
(74) Representative: Franzolin, Luigi

(56) References cited:
- EP-A1- 2 746 136
- DE-A1-102011 088 112
- GB-A- 2 500 820
- US-A1- 2002 117 368
- US-A1- 2010 089 672
- US-A1- 2013 193 751

## Description

### TECHNICAL FIELD OF THE INVENTION

This invention relates to a process for transferring electric energy from an external source to means adapted for storing or using electric energy onboard a motor vehicle. This invention also relates to a vehicle, in particular for transporting passengers, which includes, amongst others, means for storing electric energy and is adapted to such a process. Finally, the invention relates to a combination of such a vehicle and an external electric energy source.

DE102011088112 discloses a motor vehicles whose features are in the preamble of claim 1.

### BACKGROUND OF THE INVENTION

In the field of vehicles for transporting passengers, such as buses, it is known to use a battery set to store electric energy onboard a vehicle in order to provide a starter of an internal combustion engine with electric power when it is needed to start such an engine. One or two alternators are generally mounted onboard a vehicle and used to feed the battery set with electric energy when the engine is running. When the engine is not running, the battery set is used to provide some auxiliary equipments with electric energy, such auxiliary equipments including, for instance, an air conditioning system or display screens located above the doors of the bus. The battery set must always be sufficiently loaded in order to provide a high level of electric energy to the starter when needed, in particular with a current of 1000 A or more. Thus, in known buses, the battery set is permanently loaded by the alternator(s) driven by the internal combustion engine and its internal resistance induces a power loss of about 150 W. In most cases, where two battery sets are used on a bus, the power loss is about 300 W. On the other hand, the weight of such two battery sets is about 130 kg when lead batteries are used, as in most buses nowadays. The power loss due to the internal resistance of the battery sets and their weight increases the gasoil consumption of the vehicle and its carbonic emissions.

The same kind of problems occurs with other types of motor vehicles.

### SUMMARY OF THE INVENTION

The invention aims at solving the problems induced by the use of batteries on known vehicles with a new process which facilitates starting of the internal combustion engine of a motor vehicle when needed.

To this end, the invention concerns a process for transferring electric energy from an external source to means adapted for storing or using electric energy onboard a motor vehicle, where the transfer of electric energy from the external source to the onboard means is realized by magnetic induction.

Thus, the invention extends the performances of a vehicle beyond its normal use domain, since the process of the invention allows feeding some electric loads onboard the vehicle when its internal combustion engine is OFF. The invention increases the performances of the vehicle via a reduction of the overall electric needs onboard the vehicle when the internal combustion engine is running.

Thanks to the invention, when the driver knows that he or she is going to turn off the engine, he or she can park the vehicle at a location where the process of the invention can be implemented. Thanks to such a process, it is not necessary to use an electric cord to plug the vehicle on an electric network, which means that the vehicle can be parked in an open space where public has access. There is no risk that a person stumbles when crossing an electric cord or unplugs the vehicle from the electric network, either deliberately or not. On the other hand, thanks to the process of the invention, battery sets do not need to be permanently loaded by the alternator(s) of the vehicle when its internal combustion engine is running since they can be loaded when the vehicle is parked, thanks to the process of the invention. This avoids adding the internal resistance of some battery sets to the global electric circuit of the vehicle. Moreover, thanks to the energy transfer process of the invention, alternatives to lead batteries can be considered to provide a starter of an internal combustion engine with electric power. The invention takes benefits from the fact that, in some vehicles such as buses, highly elaborated gearboxes are used, which avoids stalling of the engine, unless it is requested by the driver. Thus, with this kind of vehicles, the driver can be sure that the vehicle can reach a place when the process of the invention can be implemented, before the internal engine is turned off or stalls.

The invention also aims at reducing the size of a battery mounted onboard the vehicle, by limitation of the number of starts of the internal combustion engine, and its power consumption, by disconnecting it from alternators mounted onboard the vehicle. This is achieved by the fact that the battery is located next to a magnetic field, in order not to unload the battery when the internal combustion engine is stopped.

According to a first advantageous aspect of the invention, the transfer of electric energy takes place directly between the external source and a starter of an internal combustion engine of the motor vehicle located onboard the motor vehicle, upon actuation of this starter.

The invention also concerns a vehicle including an internal combustion engine, a starter for starting the internal combustion engine and at least one alternator for providing some electric loads of the vehicle with electric current when the internal combustion engine is running. According to the invention, the vehicle also includes an inductive receiver designed and located onboard the vehicle to cooperate with an inductive emitter belonging to an external electric power source in order to have an electric current flowing along an electric line which extends onboard the vehicle.

Thanks to the invention, the inductive receiver can be used to transfer electric energy onboard the vehicle, this electric energy circulating within the vehicle in the form of an electric current. This electric current can be used to load some electric energy storing means. The inductive receiver can also be used to convey electric energy directly to the starter of the engine, when this starter must work.

According to further aspects of the invention which are advantageous but not compulsory, such a vehicle might incorporate one or several of the following features, taken in any technically admissible configuration as defined by the scope of the claims:
- The vehicle also includes electric energy storage means for providing the starter with electric power, loading means for loading the electric energy storage means and one way electric insulation means for preventing an electric current to flow from the alternator to the electric energy storage means.
- The one way electric insulation means allow an electric current to flow from the electric energy storage means to the starter.
- The one way electric insulation means include a diode mounted on an electric line, between the electric energy storage means and the alternator.
- The electric storage means include at least one lead battery.
- The electric storage means include at least one lithium battery.
- The electric storage means include at least one super capacitor.
- The inductive receiver is connected to a current converter which directly feeds an electric line connected to the starter when the internal combustion engine is to be started.
- The vehicle also includes a primary electric line, where a primary current flows from the inductive receiver, and a second electric line, where a secondary current flows from the battery set to the starter or from the current converter to the starter, the alternator and some electric loads of the vehicle being connected to the secondary electric line.

Finally, the invention concerns a combination of a vehicle and an external electric energy source, where the vehicle is a mentioned here-above and the external electric energy source includes an inductive emitter adapted to transfer electric energy to the inductive receiver of the vehicle by magnetic induction.

Advantageously, the external electric energy source is housed in a fixed casing located next to a parking place of the vehicle, in a position where the inductive emitter and the inductive receiver are aligned in a configuration of transfer of electric energy by magnetic induction, when the vehicle is parked on the parking place.

### BRIEF DESCRIPTION OF THE DRAWINGS

The invention will be better understood on the basis of the following description which is given in correspondence with the annexed figures and as an illustrative example, without restricting the object of the invention. In the annexed figures:
- figure 1 is a schematic representation of a bus according to the invention parked on a parking place in a position compatible with the implementation of a transfer process according to the invention,
- figure 2 is a schematic representation of electric circuits and components used in the bus and in the external electric source represented on figure 1,
- figure 3 is a partial schematic representation of some electric circuits for a bus according to a second aspect related to the invention, and

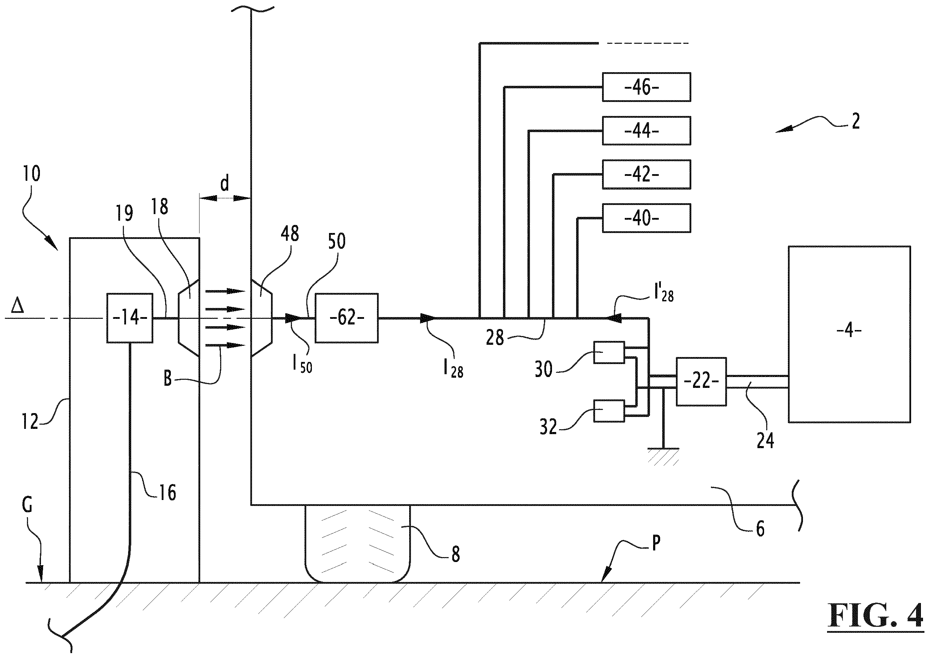

- figure 4 is a schematic representation similar to figure 2 for a bus according to a third aspect related to the invention.

### DETAILED DESCRIPTION OF SOME EMBODIMENTS

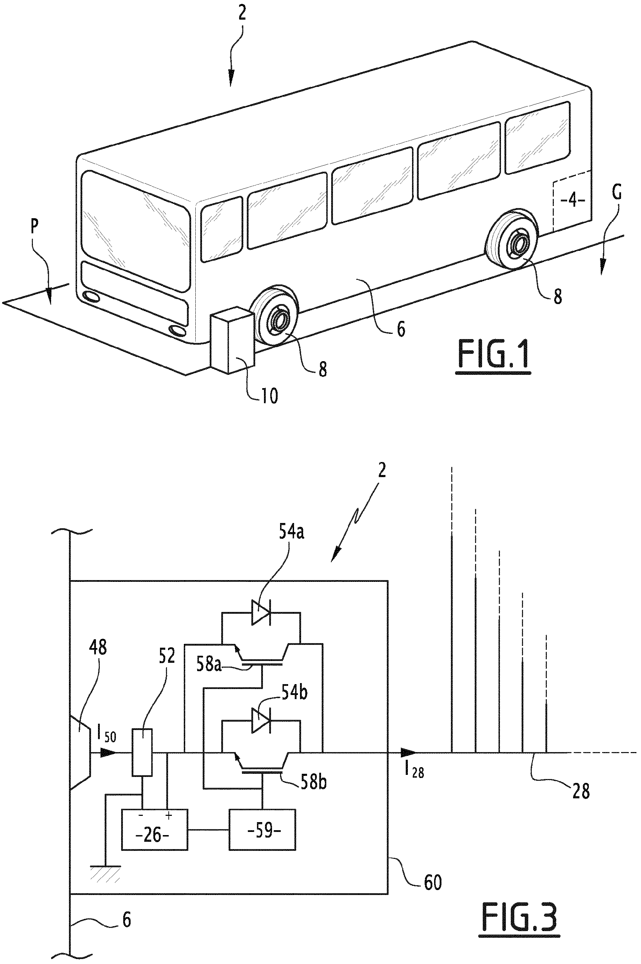

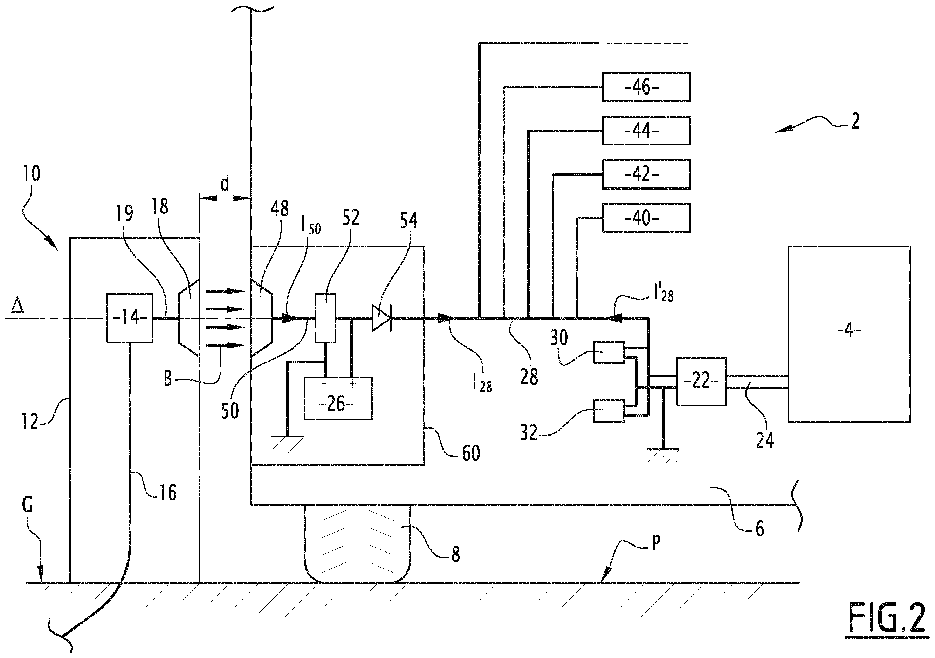

The bus 2 represented on figure 1 includes an internal combustion engine 4 mounted on a frame 6 which is supported with respect to the ground G by several wheels, two of these wheels being visible on figure 1 and one on figure 2. A loading station 10 is mounted on the ground G, next to a parking place P where bus 2 is supposed to be parked, when not in use. Such a parking place P can be provided in a bus depot or at the end of a bus line, where the bus waits between two journeys.

Loading station 10 includes a fixed casing 12 which covers an electronic current controller 14 fed with electric current from mains via a primary electric line 16. An inductive emitter 18 is also mounted within casing 12 and fed with electric power via a secondary electric line 19 which originates in controller 14. Inductive emitter 18 is located within casing 12 so that it can induce a magnetic flux represented by arrows B, on a side of casing 12.

In practice, electric lines 16 and 19 are each made of several electric conductors.

Bus 2 includes, next to engine 4, a starter 22 whose output shaft 24 meshes with a corresponding part of engine 4 in order to drive this engine when it needs to be started. A battery set 26 is mounted onboard bus 2 and is connected to the electric mass of frame 6, by its minus terminal. Via its plus terminal, battery set 26 is connected to an electric line 28 which extends up to starter 22. On the other hand, starter 22 is connected to the electric mass of frame 6 by one of its terminals and connected to electric line 28 by its other terminal. Since, battery set 26 is connected to starter 22 by electric line 28, it can provide this starter with electric power, when needed.

Two alternators 30 and 32 are also connected to electric line 28 and to the ground, next to starter 28. Some electric loads are also connected to electric line 28. These electric loads include, amongst others, a heating or air conditioning system 40, a lighting system 42, a display system 44, with electric screens located above the doors of bus 1, a central control unit 46, etc... These electric loads need to be fed with electric energy when the bus is running and, for at least some of them, when the bus is parked.

An inductive receiver 48 is also mounted onboard bus 2 and located on frame 6 in a position such that, when bus 2 is parked on parking place P, inductive emitter 18 and inductive receiver 48 are substantially aligned along an horizontal direction Δ, with a distance d between items 18 and 48, measured along direction Δ, equal to about 50 mm.

Thanks to this aspect of the invention, it is possible to transfer electric energy from loading station 10 to bus 2 by magnetic induction, via magnetic field B created between inductive emitter 18 and inductive receiver 48.

With the inductive technology used between items 18 and 48, distance d can be up to 250 mm.

Inductive receiver 48 is connected by an electric line 50 to a battery charger 52 which is adapted to load battery set 26 with electric energy.

On the other hand, a diode 54 is mounted on electric line 28 in a configuration such that an electric current I₂₈ can flow along electric line 28 from battery set 26 to starter 22 but not in the reverse direction, in particular not from alternators 30 and 32 to battery set 26. On the other hand, I₅₀ denotes the current which flows from receiver 48 to battery charger 52 along electric line 50.

Electric current I₂₈, which flows along electric line 28, derives from electric current I₅₀ which has flown previously along electric line 50 to allow battery charger 52 loading battery set 26. Thus, current I₅₀ is a primary current which flows in primary electric line 50 in order to allow battery charger 52 feeding battery set 26, which generates electric current I₂₈ as a secondary current along line 28 which forms a secondary electric line.

Because of diode 54, battery set 26, which is used to supply starter 22 with electric power when needed, is not loaded by alternators 30 and 32 when bus 2 is running. It is loaded via the magnetic induction or coupling which takes place between inductive emitter 18 and inductive receiver 48 when bus 2 is parked on parking place P, next to loading station 10. More precisely, when bus 2 is parked on parking place P, loading station 10 which is fed with electric energy via primary electric line 16, provides battery charger 52 with electric current I₅₀ thanks to the magnetic induction due to magnetic field B existing between inductive emitter 18 and inductive receiver 48. This electric current I₅₀ is converted by battery charger 52 into a current which loads battery set 26, under a tension of about 27 V, whereas the nominal tension of battery set 26 is 24 V.

When it is needed to start engine 4, battery set 26 delivers to starter 22 electric current I₂₈ which flows along electric line 28 from the left to the right on figure 2. This electric current goes through diode 54. Thus, items 26 and 48 to 54 together form an electric power unit 60 which is capable of providing starter 22 with electric energy when needed.

When bus 2 is moving on a road, while being driven by engine 4, inductive receiver 48 is away from inductive emitter 18, so that current I₅₀ is null. On the other hand, alternators 30 and 32 produce electric energy which is sent on electric line 28, towards loads 40 to 46, in the form of a current I'₂₈ which has a reverse flowing direction, with respect to current I₂₈. This current I'₂₈ is blocked by diode 54, so that it is not used to load battery set 26. Thus, the electric energy delivered by alternators 30 and 32 is fully available for electric loads 40 to 46 and the internal resistance of battery set 26 does not negatively influence the overall electric efficiency of bus 2.

Thanks to this construction of bus 2 and loading station 10, it is possible to load battery set 26 at night, when bus 2 is parked on parking place P, without having to re-load it when bus 2 is moving during the day. Battery set 26 is mainly designed for providing starter 22 with electric power when it is needed to start engine 4. In practice, once the engine has been started in the morning, it is seldom that it is stopped during a working day. Thus, battery 26 is not used very often, so that it keeps a state of charge (SOC) high enough to provide starter 22 with a high level of energy, even if it is not re-loaded before the end of the day or before the next time bus 2 stops in front of loading station 10.

In practice, in the case of an urban public transportation network, loading stations similar to station 10 can be provided at the end of some bus lines, next to a parking place where a bus waits between two journeys. Under such circumstances, battery sets 26 can also be loaded when bus 2 is parked at the end of a line, for a few tens of minutes.

When bus 2 is parked away from a loading station and engine 4 is turned off, battery set 26 provides electric loads 40 to 46 with electric energy. If bus 2 is parked along a loading station 10, battery charger 52 fed with current I₅₀ can be used, at the same time, to provide loads 40 to 46 with electric power and to load battery set 26, if needed. A state of charge detector monitors the SOC of battery set 26 and provides control means of battery charger 52 with the relevant information with this respect.

Under such circumstances, battery charger 52 is connected to electric line 28 and works as a current regulator providing loads 40 to 46 with electric power coming from inductive receiver 48.

On the other hand, since battery charger 52 is mounted onboard bus 2, together with battery set 26, different types of battery sets can be used. In particular, battery set 26 can include one or several lead batteries, which can be smaller in size than in known buses since its SOC is kept at a high level by the cooperation of items 18 and 48 when the inductive transfer process is implemented.

Alternatively, battery set 26 can include one or several lithium batteries, these batteries being lighter than lead batteries. This enables bus 2 to be lighter, so that its gasoil consumption and carbonic emissions are reduced.

According to another alternative, battery set 26 can include one or several super capacitors which are even lighter than lithium batteries. Such an approach might be preferred in case it is sure that, every time engine 4 is turned off, bus 2 is in front of a loading station 10. This can be the case with a public transportation network where loading stations similar to loading station 10 are located in each parking place of all buses of a bus company.

In the second aspect related to the invention represented on figure 3, an alternative construction is shown for the electric power unit 60 represented on figure 1. On figure 3, elements of this power unit 60 similar to the ones of the first aspect related to the invention have the same references. Hereafter, only differences with the first aspect are mentioned.

Two diodes 54a, 54b are connected in parallel between electric lines 50 and 28. A power transistor 58a is mounted in parallel to diode 54a and another power transistor 58b is mounted in parallel to diode 54b. The grid of each power transistor 58a or 58b is connected to a detector unit 59. Detector unit 59 is capable of detecting the SOC of battery 26. Detector unit 59 is capable of piloting transistors 58a and 58b in order to close them when SOC of battery 26 is below a predetermined threshold value. This allows charging battery 26 from alternators 30 and 32 in case this SOC becomes too low.

The use of two diodes 54a and 54b and two transistors 58a and 58b connected in parallel increases the reliability of electric power unit 60.

This related aspect allows collection of energy during a deceleration of bus 2.

In the first two aspects related to the invention, the tension output of a fully loaded lead battery is 12,75V, that is 25,5V for two electric batteries in series equivalent to battery 26 shown on figures 2 and 3. On the other hand, the output tension of the alternators 30 and 32 is 28,5V since one takes into account the tension drop along line 28, which can be up to 12m long. The loading tension of battery 26 by charger 52 is 29V so that, even when engine 4 is running, the inductive charging effect obtained via inductive emitter 18 and inductive receiver 48 decreases the fuel consumption of engine 4. The unloading tension of battery 26 is 18,5V, which is compatible with all low tension apparatuses of bus 2.

In the third aspect related to the invention represented on figure 3, elements of the bus 2 and the loading station 10 similar to the ones of the first aspect have the same references. Here-after, only differences with the first aspect are mentioned.

In this third third aspect related to the invention, no battery set is provided and inductive receiver 48 is connected to electric line 28 via electric line 50 and a current converter 62 connected between lines 50 and 28. No diode is used, since no battery set is to be isolated from current I'₂₈ generated by alternators 30 and 32 when engine 4 is running.

When starter 22 is to be actuated, controller 14 actuates inductive emitter 18 so that magnetic field B is generated, to the point that current I₅₀ flows within electric line 50, onboard bus 2 and after inductive receiver 48. Current I₅₀ is converted by convertor 62 into a current I₂₈ which flows along electric line 28 towards starter 22.

In other words, when starter 22 needs electric power, this electric power is directly delivered by loading station 10 via magnetic induction means 18 and 48 and current converter 62. The same applies when some of loads 40 to 46 need to be fed with electric power when bus 2 is parked along loading station 10.

Bus 2 of this third aspect related to the invention is even lighter than the one of the first aspect since it does not include a battery set nor a battery charger.

In this third aspect related to the invention, electric current I₂₈, which flows along electric line 28, derives from electric current I₅₀ flowing in electric line 50 to allow current converter 62 generating current I₂₈. In other words, electric current I₅₀ along primary electric line 50 is a primary current which induces, via current converter 62, secondary electric current I₂₈ along secondary electric line 28.

In all aspects related to the invention, the use of a magnetic induction phenomenon between loading station 10 and bus 2 means that no electric cord has to be pulled out of bus 2 and plugged into a stationary connection unit, which avoids any stumbling risk for people walking around bus 2 or any tedious operation for the bus driver who can stay in his vehicle, insofar as he or she has correctly parked bus 2 along loading station 10.

As a summary, the low tension apparatuses mounted onboard vehicle 2, such as electric loads 40 to 46, are fed with electric power either via the alternators 30 and 32 when engine 4 is running or via electric field B when engine 4 is stopped.

Starting of engine 4 occurs via starter 22 which is powered by relatively small and light battery 26 in the first two aspects related to the invention and directly by magnetic field B in the third aspect and embodiment of the invention in claim 1. Battery 26 allows keeping some electric functions, in particular safety functions, in case of emergency stop of engine 4. It is quickly loaded via magnetic field B when vehicle 2 is parked next to loading station 10.

The invention is particularly interesting for a bus, and more generally for a public transportation vehicle, insofar as the parking places of such vehicles are generally well defined and as their drivers are highly skilled professionals capable of correctly parking in order to align inductive receiver 48 correctly with respect to inductive emitter 18. However, the invention can also be implemented with other types of vehicles.

According to an alternative aspect related to the invention, a single alternator can be provided on the vehicle.

The invention is represented on the drawings in case bus 2 includes only an internal combustion engine. However, it is also possible to use the invention with a hybrid vehicle, particularly a so-called micro-hybrid vehicle.

In the first aspect related to the invention, instead of diode 54, other types of one way electric insulation means can be used. This includes, for instance, current piloted switches.

Instead of a loading station located along a side of bus 2 when it is parked, one can also use a loading station located under the bus, in front of it or above it, depending on the location of the battery set 26 onboard the vehicle.

The invention can also be implemented on existing vehicles, provided that they are retrofitted accordingly.

The aspects and alternative aspects related to the invention considered here-above can be combined in order to generate new embodiments of the invention as defined by the scope of the appended claims.

## Claims

1. Process for transferring electric energy from an external electric power source (10) to means (26; 22) adapted for storing or using electric energy onboard a motor vehicle (2), wherein the transfer of electric energy from the external source to the onboard means is realized by magnetic induction (B) wherein the motor vehicle includes at least one alternator (30, 32) for providing some electric loads (40-46) of the motor vehicle with electric current (I'28) when the internal combustion engine is running, and an inductive receiver (48) designed and located onboard the vehicle to cooperate with an inductive emitter (18) belonging to said external electric power source (10) in order to have an electric current (150, 128) flowing along an electric line (50, 28) which extends onboard the vehicle, the process being **characterized in that,** upon actuation of a starter of the internal combustion engine, the transfer of electric energy takes place between the external electric power source (10) and the starter (22) and **in that** the starter (22) is connected to the inductive receiver (48) without being connected to electric energy storage means.

2. Vehicle (2) including:
- an internal combustion engine (4),
- a starter (22) for starting the internal combustion engine and
- at least one alternator (30, 32) for providing some electric loads (40-46) of the vehicle with electric current (I'28) when the internal combustion engine is running,
- an inductive receiver (48) designed and located onboard the vehicle to cooperate with an inductive emitter (18) belonging to an external electric power source (10) in order to have an electric current (150, 128) flowing along an electric line (50, 28) which extends onboard the vehicle
**characterized in that,** upon actuation of the starter **[claim 3]** the transfer of electric energy takes place between the external electric power source (10) and the starter (22) and **in that** the inductive receiver (48) is connected to the starter (22) without being connected to electric energy storage means.

3. A vehicle according to claim 2, **characterized in that** the inductive receiver (48) is connected to a current converter (62) which directly feeds an electric line (28) connected to the starter (22) when the internal combustion engine (4) is to be started.

4. A vehicle according to claim 3, **characterized in that** it includes:
- a primary electric line (50) where a primary current (150) flows from the inductive receiver (48)
- a second electric line (28) where a secondary current (I28) flows from the battery set (26) to the starter (22) or from the current converter (62) to the starter, the alternator (30, 32) and some electric loads (40-46) of the vehicle (2) being connected to the secondary electric line.

5. A combination of a vehicle (2) and an external electric energy source (10) wherein:
- the vehicle (2) is according to one of claims 2 to 4,
- the external electric energy source (10) includes an inductive emitter (18) adapted to transfer electric energy to the inductive receiver of the vehicle by magnetic induction (B).

6. A combination according to claim 5, **characterized in that** the external electric energy source (10) is housed in a fixed casing (12) located next to a parking place (P) of the vehicle (2), in a position where the inductive emitter (18) and the inductive receiver (48) are aligned (Δ) in a configuration of transfer of electric energy by magnetic induction (B), when the vehicle is parked on the parking place.

## Patentansprüche

1. Verfahren zur Übertragung elektrischer Energie von einer externen elektrischen Energiequelle (10) zu Mitteln (26;22), ausgebildet zur Speicherung oder Benutzung elektrischer Energie an Bord eines Motorfahrzeugs (2), wobei die Übertragung elektrischer Energie von der externen Quelle zu den Bordmitteln durch magnetische Induktion (B) realisiert wird, wobei das Motorfahrzeug zumindest einen Wechselstromgenerator (30,32) zur Versorgung einiger elektrischer Lasten (40-46) des Motorfahrzeugs mit elektrischem Strom (I'28) umfasst, wenn der Verbrennungsmotor läuft, und einen induktiven Empfänger (48), ausgebildet und angeordnet an Bord des Fahrzeugs, zum Zusammenwirken mit einem induktiven Sender (18), welcher der externen elektrischen Energiequelle (10) zugeordnet ist, derart, dass ein elektrischer Strom (I50,I28) entlang einer elektrischen Leitung (50,28) fließt, die sich an Bord des Fahrzeugs erstreckt, welches Verfahren **dadurch gekennzeichnet ist, dass** bei Betätigung eines Anlassers des Verbrennungsmotors die Übertragung elektrischer Energie zwischen der externen elektrischen Energiequelle (10) und dem Anlasser (22) stattfindet, und dass der Anlasser (22) mit dem induktiven Empfänger (48) verbunden ist, ohne mit elektrischen Energiespeichermitteln verbunden zu sein.

2. Fahrzeug (2), umfassend:
- einen Verbrennungsmotor (4),
- einen Anlasser (22) zum Starten des Verbrennungsmotors, und
- zumindest einen Wechselstromgenerator (30,32) zur Versorgung einiger elektrischer Lasten (40-46) des Fahrzeugs mit elektrischem Strom (I'28), wenn der Verbrennungsmotor läuft,
- einen induktiven Empfänger (48), ausgebildet und angeordnet an Bord des Fahrzeugs zum Zusammenwirken mit einem induktiven Sender (18), der einer externen elektrischen Energiequelle (10) zugeordnet ist, derart, dass ein elektrischer Strom (I50,I28) entlang einer elektrischen Leitung (50,28) fließt, die sich an Bord des Fahrzeugs erstreckt,
**dadurch gekennzeichnet, dass** bei Betätigung des Anlassers [Anspruch 3] die Übertragung elektrischer Energie zwischen der externen elektrischen Energiequelle (10) und dem Anlasser (22) stattfindet, und dass der induktive Empfänger (48) mit dem Anlasser (22) verbunden ist, ohne mit elektrischen Energiespeichermitteln verbunden zu sein.

3. Fahrzeug gemäß Anspruch 2, **dadurch gekennzeichnet, dass** der induktive Empfänger (48) mit einem Stromrichter (62) verbunden ist, welcher direkt eine elektrische Leitung (28) speist, die mit dem Anlasser (22) verbunden ist, wenn der Verbrennungsmotor (4) startbereit ist.

4. Fahrzeug gemäß Anspruch 3, **dadurch gekennzeichnet, dass** es umfasst:
- eine primäre elektrische Leitung (50), durch welche ein Primärstrom (I50) von einem induktiven Empfänger (48) fließt,
- eine sekundäre elektrische Leitung (28), in welcher ein Sekundärstrom (I28) von dem Batteriesatz (26) zum Anlasser (22) oder von dem Stromrichter (62) zu dem Anlasser fließt, wobei der Wechselstromgenerator (30,32) und einige elektrische Lasten (40-46) des Fahrzeugs (2) mit der sekundären elektrischen Leitung verbunden sind.

5. Kombination aus einem Fahrzeug (2) und einer externen elektrischen Energiequelle (10), wobei
- das Fahrzeug (2) einem der Ansprüche 2 bis 4 entspricht,
- die externe elektrische Energiequelle (10) einen induktiven Sender (18) umfasst, ausgebildet zur Übertragung elektrischer Energie zu dem induktiven Empfänger des Fahrzeugs durch magnetische Induktion (B).

6. Kombination gemäß Anspruch 5, **dadurch gekennzeichnet, dass** die externe elektrische Energiequelle (10) in einem festen Gehäuse (12) untergebracht ist, angeordnet neben einem Parkplatz (P) des Fahrzeugs (2) in einer Position, in welcher der induktive Sender (18) und der induktive Empfänger (48) aufeinander ausgerichtet (Δ) sind, in einer Anordnung zur Übertragung elektrischer Energie durch magnetische Induktion (B), wenn das Fahrzeug auf dem Parkplatz geparkt wird.

## Revendications

1. Procédé pour transférer de l'énergie électrique d'une source d'énergie électrique externe (10) à un moyen (26 ; 22) adapté pour stocker ou utiliser de l'énergie électrique à bord d'un véhicule à moteur (2), dans lequel le transfert d'énergie électrique depuis la source externe jusqu'au moyen à bord est réalisé par induction magnétique (B) dans lequel le véhicule à moteur inclut au moins un alternateur (30, 32) pour fournir un courant électrique (I'28) à certaines charges électriques (40 à 46) du véhicule à moteur lorsque le moteur à combustion interne est en fonctionnement, et un récepteur inductif (48) conçu et situé à bord du véhicule pour coopérer avec un émetteur inductif (18) appartenant à ladite source d'énergie électrique externe (10) afin d'avoir un courant électrique (I50, I28) circulant le long d'une ligne électrique (50, 28) qui s'étend à bord du véhicule, le procédé étant **caractérisé en ce que**, lors de l'actionnement d'un starter du moteur à combustion interne, le transfert d'énergie électrique survient entre la source d'énergie électrique externe (10) et le starter (22) et **en ce que** le starter (22) est connecté au récepteur inductif (48) sans être connecté au moyen de stockage d'énergie électrique.

2. Véhicule (2) incluant :
- un moteur à combustion interne (4),
- un starter (22) pour démarrer le moteur à combustion interne et
- au moins un alternateur (30, 32) pour fournir un courant électrique (I'28) à certaines charges électriques (40 à 46) du véhicule lorsque le moteur à combustion interne est en fonctionnement,
- un récepteur inductif (48) conçu et situé à bord du véhicule pour coopérer avec un émetteur inductif (18) appartenant à une source d'énergie électrique externe (10) afin d'avoir un courant électrique (I50, I28) circulant le long d'une ligne électrique (50, 28) qui s'étend à bord du véhicule
**caractérisé en ce que**, lors de l'actionnement du starter [revendication 3] le transfert d'énergie électrique survient entre la source d'énergie électrique externe (10) et le starter (22) et **en ce que** le récepteur inductif (48) est connecté au starter (22) sans être connecté au moyen de stockage d'énergie électrique.

3. Véhicule selon la revendication 2, **caractérisé en ce que** le récepteur inductif (48) est connecté à un convertisseur de courant (62) qui alimente directement une ligne électrique (28) connectée au starter (22) lorsque le moteur à combustion interne (4) doit être démarré.

4. Véhicule selon la revendication 3, **caractérisé en ce qu'**il inclut :
- une ligne électrique primaire (50) où un courant primaire (I50) circule depuis le récepteur inductif (48)
- une seconde ligne électrique (28) où un courant secondaire (I28) circule depuis le jeu de batteries (26) jusqu'au starter (22) ou depuis le convertisseur de courant (62) jusqu'au starter, l'alternateur (30, 32) et certaines charges électriques (40 à 46) du véhicule (2) étant connectés à la ligne électrique secondaire.

5. Combinaison d'un véhicule (2) et d'une source d'énergie électrique externe (10) dans laquelle :
- le véhicule (2) est selon l'une des revendications 2 à 4,
- la source d'énergie électrique externe (10) inclut un émetteur inductif (18) adapté pour transférer de l'énergie électrique au récepteur inductif du véhicule par induction magnétique (B).

6. Combinaison selon la revendication 5, **caractérisée en ce que** la source d'énergie électrique externe (10) est logée dans un boîtier fixe (12) situé à côté d'une place de stationnement (P) du véhicule (2), dans une position où l'émetteur inductif (18) et le récepteur inductif (48) sont alignés (Δ) dans une configuration de transfert d'énergie électrique par induction magnétique (B), lorsque le véhicule est stationné sur la place de stationnement.
